(19) **Europäisches Patentamt**

**European Patent Office**

**Office européen des brevets**

(11) **EP 0 976 446 B1**

(12) **EUROPÄISCHE PATENTSCHRIFT**

(45) Veröffentlichungstag und Bekanntmachung des Hinweises auf die Patenterteilung:
**10.09.2003 Patentblatt 2003/37**

(51) Int Cl.⁷: **B01J 8/02**, B01J 19/24, C01B 3/32, C01B 3/38, C01B 3/48, H01M 8/06

(21) Anmeldenummer: **99112311.8**

(22) Anmeldetag: **26.06.1999**

(54) **Reaktoreinheit in einem System zur Erzeugung eines wasserstoffreichen Gases aus einem flüssigen Rohkraftstoff**

Reactor unit in a system to produce a hydrogen-rich gas from a liquid fuel

Réacteur dans un système permettant de produire un gaz riche en hydrogène à partir d'un carburant liquide

(84) Benannte Vertragsstaaten:
**DE FR GB IT**

(30) Priorität: **25.07.1998 DE 19833644**

(43) Veröffentlichungstag der Anmeldung:
**02.02.2000 Patentblatt 2000/05**

(73) Patentinhaber: **Ballard Power Systems AG 73230 Kirchheim / Teck-Nabern (DE)**

(72) Erfinder:
• **Strobel, Barbara 89160 Dornstadt (DE)**
• **Wolfsteiner, Matthias 91793 Alesheim (DE)**

(74) Vertreter: **Beyer, Andreas, Dr. et al Wuesthoff & Wuesthoff, Patent- und Rechtsanwälte, Schweigerstrasse 2 81541 München (DE)**

(56) Entgegenhaltungen:
DE-A- 19 753 720    DE-C- 19 526 886
US-A- 4 873 368

• PATENT ABSTRACTS OF JAPAN vol. 017, no. 452 (C-1099), 19. August 1993 (1993-08-19) & JP 05 105404 A (ISHIKAWAJIMA HARIMA HEAVY IND CO LTD), 27. April 1993 (1993-04-27)
• PATENT ABSTRACTS OF JAPAN vol. 017, no. 452 (C-1099), 19. August 1993 (1993-08-19) & JP 05 105403 A (ISHIKAWAJIMA HARIMA HEAVY IND CO LTD), 27. April 1993 (1993-04-27)
• PATENT ABSTRACTS OF JAPAN vol. 017, no. 452 (C-1099), 19. August 1993 (1993-08-19) & JP 05 105405 A (ISHIKAWAJIMA HARIMA HEAVY IND CO LTD), 27. April 1993 (1993-04-27)

**Beschreibung**

Die Erfindung betrifft eine Reaktoreinheit in einem System zur Erzeugung eines wasserstoffreichen Gases aus einem flüssigen Rohkraftstoff nach dem Oberbegriff des Anspruchs 1.

Für den Betrieb von Brennstoffzellen mit Polymermembranen, kurz PEM-Brennstoffzellen, für mobile Anwendungen kann ein wasserstoffreiches Gas aus einem flüssigen Rohkraftstoff, insbesondere Methanol, zum Beispiel durch Wasserdampfreformierung erzeugt werden:

$$CH_3OH + H_2O \longrightarrow 3H_2 + CO_2.$$

Bei diesem Prozeß fällt als Nebenprodukt Kohlenmonoxid in Mengen an, die die PEM-Brennstoffzelle schädigen. Das Reformer-Produktgas muß daher in einer Gasreinigungsstufe gereinigt werden. Als möglicher Lösungsansatz ist z.B. die selektive Oxidation an einem geeigneten Oxidationskatalysator bekannt. Die CO-Oxidation ist stark exotherm.

Während des Reaktionsverlaufs einer chemischen Reaktion ist es manchmal vorteilhaft, eine Temperaturänderung über der Reaktionszone vorzugeben:

- bei der (stark exothermen) selektiven CO-Oxidation wird der CO-Gehalt verringert, was zu niedrigeren CO-Konzentrationen führt. Dadurch wird die Selektivität schlechter. Außerdem gilt, daß die Selektivität umso schlechter wird, je höher die Temperatur ist. Durch Absenkung des Temperaturniveaus im hinteren Bereich der Reaktionszone kann dort die Selektivität wesentlich verbessert werden.
- bei der endothermen Reformierungsreaktion kann durch eine niedrigere Temperatur im hinteren Bereich der Reaktionszone eine Verringerung der CO-Ausgangskonzentration erreicht werden. Hier spielt das thermodynamische Gleichgewicht der exothermen Wasser-Gas-Shift-Reaktion eine Rolle, das sich mit höherer Temperatur zu größeren CO-Konzentrationen verschiebt.

Bei den bekannten Reaktorsystemen zur Durchführung der genannten Reaktionen wird entweder ein einzelner Reaktor auf einheitlicher Temperatur verwendet, oder es werden zur Realisierung der unterschiedlichen Temperaturniveaus baulich getrennte Reaktoreinheiten eingesetzt.

Im ersten Fall ist hinsichtlich der Temperatur keine optimale Anpassung an den Reaktionsverlauf möglich. Im zweiten Fall ergibt sich ein hoher Volumen- und Massenbedarf.

In der GB 922259 ist eine Reaktoreinheit für die Reformierung von Methanol oder für die CO-Shiftreaktion beschrieben, bei der die Zugabe des Wasserdampfs für die Shiftreaktion außerhalb des eigentlichen Reaktionsraumes in mehreren, mit dem Reaktionsraum verbundenen Temperierräumen erfolgt. Bei der Zugabe des Wassers wird dieses mit dem aus dem Reaktionsraum ausgeleiteten Reaktionsmedium in direkten Kontakt gebracht, so daß Wasserdampf entsteht, der von dem Reaktionsmedium aufgenommen wird. Das Reaktionsmedium wird anschließend in den Reaktionsraum an ein weiteres Katalysatorbett zurückgeführt. Durch die Zugabe des Wassers wird das Reaktionsmedium schockartig abgekühlt. Diese Abkühlung kann für die Temperatursteuerung der Reaktion am Katalysatorbett genutzt werden.

Eine sehr ähnliche Reaktoreinheit für die CO-Shiftreaktion ist in der DE 197 19 997 A1 offenbart, bei der mehrere, in Strömungsrichtung voneinander beabstandete Räume vorhanden sind, in die Wasser eingedüst wird. Die Wahl der Wassertemperatur kann zur Temperatursteuerung der katalytischen Reaktion genutzt werden.

In der EP 0 529 329 A2 ist eine Reaktoreinheit für die CO-Shiftreaktion offenbart, bei der die Abwärme mittels zweier Temperiermedien abgeführt wird. Die Strömungsräume für die Temperiermedien schließen den Reaktionsraum für die Shiftreaktion sandwichartig von zwei Seiten ein.

Es ist deshalb Aufgabe der Erfindung, einen Reaktor zu schaffen, mit dem eine für die jeweilige Reaktion optimierte Anpassung der Temperatur an den Reaktionsverlauf bei geringem Volumen- und Massenbedarf möglich ist.

Diese Aufgabe wird mit einer Reaktoreinheit gemäß Anspruch 1 gelöst. Vorteilhafte Ausführungen sowie eine Verwendung der Reaktoreinheit sind Gegenstand weiterer Ansprüche.

Erfindungsgemäß sind in der in plattenbauweise ausgeführten Reaktoreinheit außer dem Reaktionsraum für das Reaktionsmedium zwei voneinander und von dem Reaktionsraum getrennte Temperierräume integriert, die verschiedenen Bereichen des Reaktionsraums zugeordnet sind. Dadurch werden innerhalb des Reaktionsraums der Reaktoreinheit zwei Reaktionszonen gebildet, die auf unterschiedlichen Temperaturniveaus gehalten werden können.

Die beiden Temperierräume können abhängig von den Anforderungen, die sich aus dem Reaktionsverlauf ergeben, sowohl als Energiesenke als auch als Energiequelle ausgebildet sein. Im ersten Fall kann man den Temperierraum als Kühlraum bezeichnen, im letzteren Fall handelt es sich um einen Heizraum.

In einer Ausführung der Erfindung werden die beiden Temperierräume jeweils von einem flüssigen oder gasförmigen Temperiermedium durchströmt, so daß die beiden Temperierräume Teil eines Kühl- oder Heizkreislaufs sind.

In einer alternativen Ausführung kann in den Temperierräumen ein Katalysatormaterial vorhanden sein, wobei durch das Ablaufen einer speziellen chemischen Reaktion (endo- oder exotherm) an diesem Katalysator die Einstellung eines bestimmten Temperatumiveaus bewirkt werden kann.

Mit der erfindungsgemäßen Reaktoreinheit wird eine optimierte Anpassung der Reaktortemperaturen an den Reaktionsverlauf erreicht. Dabei können die Größen der beiden unterschiedlich temperierten Reaktionszonen nach Bedarf beliebig variiert werden.

Durch die Integration von zwei, bisher baulich getrennten Reaktionsstufen in einer baulichen Einheit wird eine Kompaktierung des Reaktors erreicht. Es ergibt sich eine wesentliche Volumen- und Massenreduzierung. Durch die Ausführung der Reaktoreinheit in Plattenbauweise reduziert sich Masse und Volumen gegenüber den bekannten, baulich getrennten Reaktionsstufen um zwei Endplatten.

Gleichzeitig ist mit der erfindungsgemäßen Lösung eine bedeutende Kostenreduktion gegenüber den bekannten Reaktoren verbunden.

Die erfindungsgemäße Reaktoreinheit stellt keine hohen Anforderungen an die Fertigungstechnik und kann deshalb einfach und kostengünstig hergestellt werden.

Die erfindungsgemäße Reaktoreinheit kann innerhalb eines System zur Erzeugung eines wasserstoffreichen Gases aus einem flüssigen Rohkraftstoff, insbesondere zur Reformierung von Kohlenwasserstoffen oder einer Wasser-Gas-Shift-Reaktion oder in der Gasreinigungsstufe des Systems zur selektiven CO-Oxidation eingesetzt werden.

Die erfindungsgemäße Reaktoreinheit kann insbesondere in einem PEM-Brennstoffzellensystem für mobile Anwendungen eingesetzt werden.

Die Erfindung wird anhand eines Ausführungsbeispiels näher erläutert. Es zeigen:

Fig. 1 die Schnittdarstellung einer erfindungsgemäßen Reaktoreinheit (Führung des Reaktionsmediums);

Fig. 2 eine weitere Schnittdarstellung der erfindungsgemäßen Reaktoreinheit (Führung der Temperiermedien).

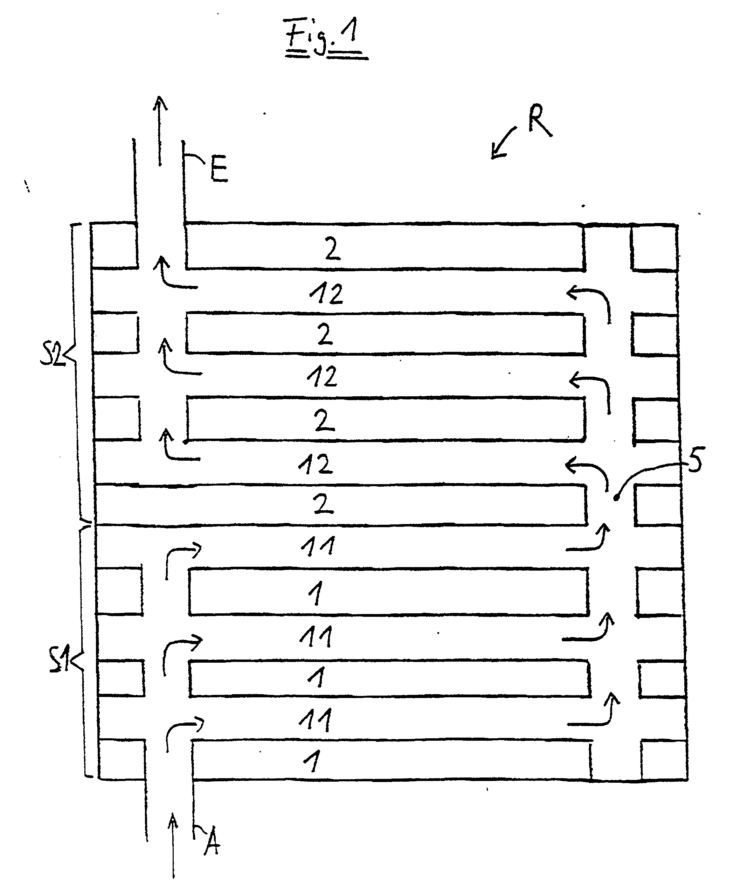

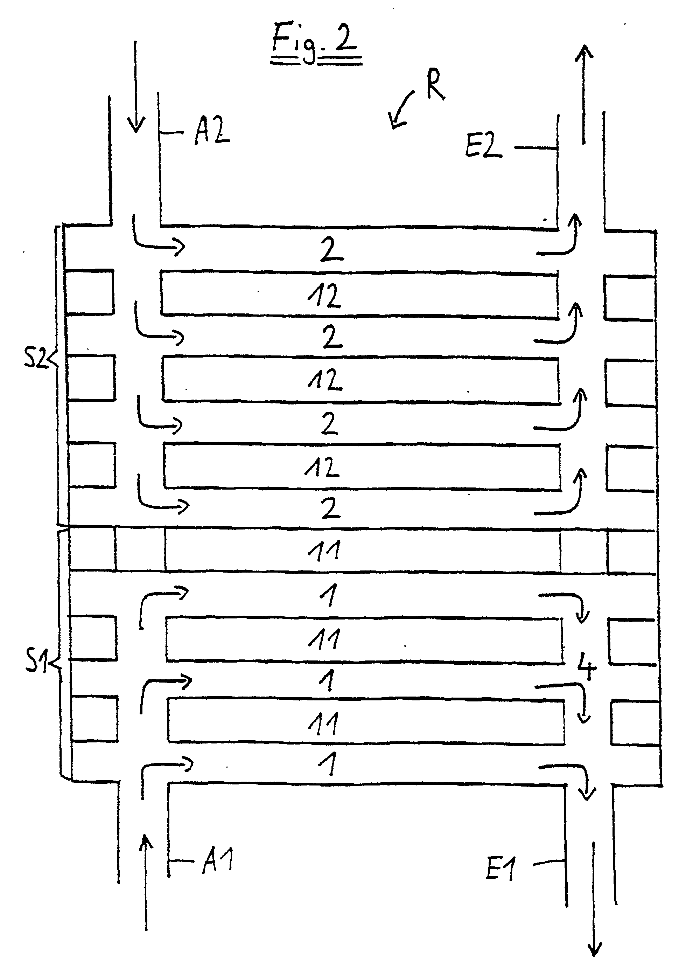

In den Fig. 1 und 2 ist in zwei Schnittdarstellungen eine Ausführung der erfindungsgemäßen Reaktoreinheit beispielhaft dargestellt. In dieser Ausführung werden die beiden Temperierräume jeweils von einem Temperiermedium durchlaufen. Aus der Fig. 1 ist insbesondere die Führung des Reaktionsmediums innerhalb des Reaktionsraums zu erkennen. Die Strömungsrichtungen des Reaktionsmediums sind mit Pfeilen veranschaulicht. Fig. 2 zeigt einen weiteren Schnitt durch dieselbe Reaktoreinheit, wobei die Führung der Temperiermedien innerhalb der beiden Temperierräume mittels Pfeilen dargestellt ist. Die Reaktoreinheit R ist erfindungsgemäß in Plattenbauweise ausgebildet. Dazu werden mehrere, einseitig oder beidseitig profilierte Platten (in der Fig. 1 nicht als Einzelteile dargestellt) aufeinandergelegt und zur Abdichtungen der Medien untereinander sowie zur Umgebung hin mit dazwischenliegenden Dichtungen (nicht dargestellt) versehen. Die einzelnen Platten können auch zusammengelötet oder geschweißt werden. Die Profilierungen der Platten bilden Strömungskanäle für Reaktionsmedium und Temperiermedien. An den Wandungen der von den Reaktionsmedien durchflossenen Kanälen befindet sich zumindest abschnittsweise Katalysatormaterial. Das Katalysatormaterial kann aber auch in Form von Schüttgut (Pellets) eingebracht werden. Die einzelnen Platten weisen außerdem Durchbrechungen für die Zu- und Abfuhr der beteiligten Medien auf. Derartige, dem Fachmann wohlbekannte Plattenmodule sind z.B in der DE 196 17 396 A1 im einzelnen beschrieben.

Die erfindungsgemäße Reaktoreinheit R umfaßt in der gezeigten Ausführung zwei hintereinandergeschaltete Stufen S1 und S2 und bildet dabei eine kompakte bauliche Einheit. Das Reaktionsmedium wird über den Eingang A in die erste Stufe S1 geführt und durchläuft darin die einzelnen, Katalysatormaterial enthaltende Kanäle 11 des Reaktionsraums. Über die Durchführung 5 wird das Reaktionsmedium anschließend in die zweite Stufe S2 geleitet, wo es die Kanäle 12 des Reaktionsraums durchläuft und über den Ausgang E die Reaktoreinheit R verläßt.

Die erfindungsgemäße Reaktoreinheit R außerdem umfaßt zwei voneinander getrennte Temperierräume, die jeweils von einem Temperiermedium durchströmt werden. Dabei kann das Temperiermedium im ersten Temperierraum verschieden sein von dem Temperiermedium im zweiten Temperierraum. Jeder Temperierraum ist einer Reaktorstufe S1, S2 zugeordnet. Wie aus der Fig. 2 zu erkennen ist, wird das erste Temperiermedium (dessen Strömungsrichtungen sind durch Pfeile dargestellt) über den Eingang A1 in die erste Stufe S1 der Reaktoreinheit eingespeist, durchläuft die Kanäle 1 des ersten Temperierraums und verläßt die Reaktoreinheit R über den Ausgang E1. Die Kanäle 1 des ersten Temperierraums liegen benachbart zu den Kanälen 11 des Reaktionsraums, so daß sich ein guter Wärmekontakt zwischen Reaktionsmedium und Temperiermedium ergibt.

Analog zu der Führung des ersten Temperiermediums wird das zweite Temperiermedium über den Eingang A2 in die zweite Stufe S2 der Reaktionseinheit R eingeführt, durchläuft dort die Kanäle 2 des zweiten Temperierraums und verläßt die Reaktionseinheit über Ausgang E2.

Zwischen den Kanälen 1 für das erste Temperiermedium und den Kanälen 2 für das zweite Temperiermedium besteht keine Verbindung. Die beiden Temperiermedien werden somit getrennt voneinander innerhalb der Reaktoreinheit R in verschiedenen Temperierräumen geführt. Die beiden Temperiermedien können je nach Bedarf im Gegen- und/oder Gleichstrom geführt werden.

Es ergibt sich in der ersten Stufe S1 der Reaktoreinheit eine Reaktionszone, bei der mittels des ersten Temperiermediums ein erstes Temperaturniveau eingestellt werden kann, und eine weitere Reaktionszone innerhalb der zweiten Stufe S2 der Reaktoreinheit, mit einem beliebigen, vom ersten Temperaturniveau abweichenden Temperaturniveau.

Als Temperiermedien können vorteilhaft solche Fluide verwendet werden, die ohnehin bereits im Gesamtsystem vorhanden sind. Im Falle eines Brennstoffzellensystems bietet sich dabei der Ölkreislauf an, der für die Temperierung der endothermen Methanol-Reformierungsreaktion sowie für die Verdampfung von Wasser und Methanol eingesetzt wird. Im einzelnen wird das Öl zuerst in einem katalytischen Brenner auf eine Temperatur T1 erwärmt, dient dann zur Heizung des Reformierungsreaktors (der nicht erfindungsgemäß ausgebildet sein muß) und anschließend zur Verdampfung des Methanols und Wasser. Danach ist das Öl auf eine niedrigere Temperatur T2 abgekühlt.

Diese beiden Temperaturniveaus T1, T2 des Öls können für die Temperierung einer erfindungsgemäßen Reaktoreinheit für die Durchführung einer CO-Oxidation ausgenutzt werden. Nach Verlassen des katalytischen Brenners wird das Öl mit der Temperatur T1 in den ersten Temperierraum der CO-Oxidations-Reaktoreinheit geführt. Danach wird das Öl in den Reformierungsreaktor und anschließend in den Verdampfer geführt. Das Öl befindet sich danach auf Temperaturniveau T2 und wird in den zweiten Temperierraum des CO-Oxidationsreaktors geleitet.

In einer weiteren - hier nicht dargestellten Ausführung - umfaßt die erfindungsgemäße Reaktoreinheit eine Vorrichtung zur internen Luftzuführung, z.B. Luft, in den Reaktionsraum. Zum Beispiel kann sich eine Zuführleitung für das oxidierende Gas direkt in den Sammelkanal 4 für die Abfuhr des Reaktionsgases innerhalb der ersten Reaktorstufe S1 erstrecken.

Die Katalysatormaterialien innerhalb des Reaktionsraums können in Stufe 1 und Stufe 2 je nach Reaktion gleich oder unterschiedlich gewählt werden.

**Patentansprüche**

1. Reaktoreinheit in einem System zur Erzeugung eines wasserstoffreichen Gases aus einem flüssigen Rohkraftstoff, mit einem Reaktionsraum für ein Reaktionsmedium, der Katalysatormaterial enthält, und Mitteln zur Temperierung des Reaktionsraums, wobei die Mittel zur Temperierung zwei Temperierräume für jeweils ein Temperiermedium umfassen, die verschiedenen Bereichen des Reaktionsraums zugeordnet sind, so daß innerhalb des Reaktionsraums zwei Reaktionszonen gebildet werden, die auf unterschiedlichen Temperaturniveaus gehalten werden können, **dadurch gekennzeichnet, daß** die Reaktoreinheit in Plattenbauweise ausgeführt ist, wobei die beiden Temperierräume voneinander sowie vom Reaktionsraum getrennt ausgebildet sind, so daß innerhalb der Reaktoreinheit Reaktionsmedium und Temperiermedium jeweils separiert voneinander geführt werden können.

2. Reaktoreinheit nach Anspruch 1, **dadurch gekennzeichnet, daß** ein oder beide Temperierräume jeweils Abschnitte eines Temperierkreislaufs für ein Temperiermedium bilden.

3. Reaktoreinheit nach Anspruch 1, **dadurch gekennzeichnet, daß** in einem oder beiden Temperierräumen ein weiteres Katalysatormaterial enthalten ist, wobei durch eine chemischen Reaktion an diesem Katalysatormaterial die Einstellung eines bestimmten Temperatumiveaus bewirkt werden kann.

4. Reaktoreinheit nach einem der vorangehenden Ansprüche, **dadurch gekennzeichnet, daß** in den beiden Reaktionszonen innerhalb des Reaktionsraums unterschiedliche Katalysatormaterialien vorhanden sind.

5. Reaktoreinheit nach einem der vorangehenden Ansprüche, **dadurch gekennzeichnet, daß** in den beiden Reaktionszonen innerhalb des Reaktionsraums identische Katalysatormaterialien vorhanden sind.

6. Reaktoreinheit nach einem der vorangehenden Ansprüche, **dadurch gekennzeichnet, daß** das in dem Reaktionsraum vorhandene Katalysatormaterial zur selektiven CO-Oxidation dient.

7. Reaktoreinheit nach einem der vorangehenden Ansprüche, **dadurch gekennzeichnet, daß** das in dem Reaktionsraum vorhandene Katalysatormaterial zur Reformierung von Kohlenwasserstoffen oder zur CO-Shift-Reaktion dient.

8. Reaktoreinheit nach einem der vorangehenden Ansprüche, **dadurch gekennzeichnet, daß** sie Mittel zur internen Zuführung eines oxidierenden Gases in den Reaktionsraum umfaßt.

9. Reaktoreinheit nach einem der vorangehenden Ansprüche, **dadurch gekennzeichnet, daß** sie als Plattenmodul ausgebildet ist.

10. Verwendung einer Reaktoreinheit nach einem der vorangehenden Ansprüche in einem Polymermembranen-Brennstoffzellensystem für mobile Anwendungen.

**Claims**

1. Reactor unit in a system for producing a hydrogen-rich gas from a liquid fuel, having a reaction space for a reaction medium, the reaction space holding catalyst material, and having means for controlling the temperature of the reaction space, the temperature-control means comprising two temperature-control spaces for in each case one temperature-control medium, which are assigned to different regions of the reaction space, so that two reaction zones which can be held at different temperature levels are formed within the reaction space, **characterized in that** the reactor unit is of plate-type design, the two temperature-control spaces being formed separately from one another and from the reaction space, so that reaction medium and temperature-control medium can each be guided separately from one another within the reactor unit.

2. Reactor unit according to Claim 1, **characterized in that** one or both temperature-control spaces in each case form sections of a temperature-control circuit for a temperature-control medium.

3. Reactor unit according to Claim 1, **characterized in that** a further catalyst material is present in one or both temperature-control spaces, it being possible to set a specific temperature level by means of a chemical reaction at this catalyst material.

4. Reactor unit according to one of the preceding claims, **characterized in that** different catalyst materials are present in both reaction zones within the reaction space.

5. Reactor unit according to one of the preceding claims, **characterized in that** identical catalyst materials are present in both reaction zones within the reaction space.

6. Reactor unit according to one of the preceding claims, **characterized in that** the catalyst material which is present in the reaction space is used for selective CO oxidation.

7. Reactor unit according to one of the preceding claims, **characterized in that** the catalyst material which is present in the reaction space is used to reform hydrocarbons or for the CO shift reaction.

8. Reactor unit according to one of the preceding claims, **characterized in that** it comprises means for internally feeding an oxidizing gas into the reaction space.

9. Reactor unit according to one of the preceding claims, **characterized in that** it is designed as a plate module.

10. Use of a reactor unit according to one of the preceding claims in a polymer membrane fuel cell system for mobile applications.

**Revendications**

1. Réacteur dans un système permettant de produire un gaz riche en hydrogène à partir d'un carburant liquide, pourvu d'une chambre de réaction pour un milieu de réaction, laquelle contient un matériau catalytique, et de moyens pour la régulation de la température dans la chambre de réaction, lesdits moyens comprenant deux chambres thermorégulatrices destinées chacune à un milieu thermorégulateur et attribuées à différentes zones de la chambre de réaction, de manière qu'il soit constitué à l'intérieur de la chambre de réaction deux zones de réaction pouvant être maintenues à des niveaux de température différents, **caractérisé en ce que** le réacteur est de type à plaques, les deux chambres thermorégulatrices étant conçues séparées l'une de l'autre et séparées de la chambre de réaction de manière que le milieu de réaction et le milieu thermorégulateur puissent être respectivement conduits séparés l'un de l'autre à l'intérieur du réacteur.

2. Réacteur selon la revendication 1, **caractérisé en ce qu'**une ou les deux chambres thermorégulatrices forment chacune des parties d'un circuit de régulation de température pour un milieu thermorégulateur.

3. Réacteur selon la revendication 1, **caractérisé en ce qu'**une ou les deux chambres thermorégulatrices contiennent un autre matériau catalytique, une réaction chimique sur ledit matériau catalytique pouvant provoquer le réglage d'un niveau de température déterminé.

4. Réacteur selon l'une des revendications précitées, **caractérisé en ce que** les matériaux catalytiques en place dans les deux zones de réaction à l'intérieur de la chambre de réaction sont différents.

5. Réacteur selon l'une des revendications précitées, **caractérisé en ce que** les matériaux catalytiques en place dans les deux zones de réaction à l'intérieur de la chambre de réaction sont identiques.

6. Réacteur selon l'une des revendications précitées, **caractérisé en ce que** le matériau catalytique en place dans la chambre de réaction sert à l'oxydation sélective de CO.

7. Réacteur selon l'une des revendications précitées, **caractérisé en ce que** le matériau catalytique en place dans la chambre de réaction sert au reformage d'hydrocarbures ou à la mise en oeuvre de la réaction de type « shift ».

**8.** Réacteur selon l'une des revendications précitées, **caractérisé en ce qu'**il comprend des moyens permettant l'apport interne d'un gaz oxydant dans la chambre de réaction.

**9.** Réacteur selon l'une des revendications précitées, **caractérisé en ce qu'**il est conçu sous forme d'un module à plaques.

**10.** Utilisation d'un réacteur selon l'une des revendications précitées dans un système de pile à combustible à membrane polymère pour des applications mobiles.

Fig. 1

Fig. 2